# EUROPÄISCHE PATENTSCHRIFT

(11) **EP 1 106 147 B1**
(45) Veröffentlichungstag und Bekanntmachung des Hinweises auf die Patenterteilung: **23.03.2005**
(21) Anmeldenummer: 00122270.2
(22) Anmeldetag: 19.10.2000
(51) Int. Cl.: A61C 19/00

(54) **Mischanordnung**
Mixing arrangement
Dispositif de mélange

(30) Priorität: 09.12.1999 DE 19959437
(43) Veröffentlichungstag der Anmeldung: 13.06.2001
(73) Patentinhaber: Ivoclar Vivadent AG, 9494 Schaan (LI)
(72) Erfinder: Salz, Ulrich, Dr., 88131 Lindau (DE); Rumphorst, André, Dr., 9490 Vaduz (LI); Gianasmidis, Alexandros, 9435 Heerbrugg (CH); Müller, Frank, 6800 Feldkirch (AT)
(74) Vertreter: Baronetzky, Klaus, Dipl.-Ing.

(56) Entgegenhaltungen:
- EP-A- 0 100 937
- DE-A- 2 009 403

## Beschreibung

Die Erfindung betrifft eine Mischanordnung gemäß dem Oberbegriff von Anspruch 1, sowie ein Verfahren gemäß dem Oberbegriff von Anspruch 12.

Eine derartige Mischanordnung ist aus der DE-OS 3 733 799 bekannt. Bei dieser bekannten Lösung ist eine Unterlage vorgesehen, die Farbmulden aufweist, in welchen Farbmassen gemischt werden können. Es sind mehrere Farbmulden nebeneinander vorgesehen, um einen Vergleich der erzielten Farbgebung zu ermöglichen.

Es sind zahlreich weitere Mischanordnungen mit Unterlagen bekannt geworden, bei denen entweder ein Bestandteil einer Mischung bereits vorab auf der Unterlage aufbewahrt und gelagert und bei der Anwendung ein weiterer Bestandteil hinzugefügt wird oder bei denen beide oder gegebenenfalls alle, also mehr als zwei, Bestandteile bei der Anwendung auf der Unterlage zusammengemischt werden.

Derartige Unterlagen können flach oder im wesentlichen muldenförmig sein, um die Entnahme und auch den Mischvorgang selbst zu erleichtern. Die bislang bekannten Mischanordnungen verwenden Unterlagen, bei denen die zu mischenden Komponenten nacheinander aufgetragen werden. Die Unterlagen können muldenförmig sein (vgl. z.B. DE-OS 3 733 799), oder auch flach, wobei das Mischen dann mit einem Spatel oder einem anderen geeigneten Applikationselement durchgeführt werden kann.

Es ist vorgeschlagen worden, die Unterlage als Einmal-Unterlage auszubilden, beispielsweise aus einer preisgünstigen Kunststoffolie, oder aus einem eher massiven Werkstoff, wobei die Oberfläche der Unterlage dann in der Regel abwischbar ausgebildet ist und gut gereinigt werden soll. Feste und wiederverwendbare Unterlagen lassen sich zwar vom Materialverbrauch her in Dentallabors und Zahnarztpraxen kostengünstig einsetzen. Sie erfordern jedoch eine gewisse Sorgfalt bei der Reinigung, um zu verhindern, daß etwaige Reste des vorherigen Mischvorgangs Verunreinigungen belassen. Hiervon abgesehen ist eine wiederverwendbare Unterlage in der Regel nicht für alle im Dentalbereich zu mischenden Substanzen einsetzbar, insbesondere, wenn es sich um kleine, sorgfältig aufeinander abgestimmte Substanzen, wie z.B. um Adhäsive, handelt.

Ferner ist es bereits vorgeschlagen worden, eine sogenannte Single-Dose-Einheit vorzufertigen und dem Zahnarzt eine vorgefertigte und verpackte Einheit aus den zu vermischenden Substanzen, dem Applikationselement und gegebenenfalls auch der Unterlage an die Hand zu geben. Die verpackungstechnisch und von der Herstellungskosten her günstigste Lösung hierbei wäre es, eine Blisterpackung herzustellen, die verschiedene Aufnahmeöffnungen für die Substanzen und beispielsweise auch für das Applikationselement aufweist. Wenn aber beispielsweise eine der zu mischenden Substanzen eine Flüssigkeit ist, ist diese Lösung wenig praktikabel, da das Zusammenbringen der Einzelsubstanzen, die je auf der gleichen Basis aufgebracht sind, es erfordert, daß die Blisterbasis auseinandergeschnitten wird um ein Hinzufügen in der gewünschten Weise zu erlauben. Diese Art des Mischens wäre aber im Grunde verschmutzungsanfällig und umständlich, so daß sie - soweit ersichtlich - keine Marktbedeutung erhalten hat.

Erfahrene Zahntechniker und Zahnärzte bevorzugen gegenüber der Verwendung von Single-Dose-Einheiten in vielen Fällen Gebinde mit Vorabfüllungen der zu mischenden Substanzen. Derartige Lösungen erfordern zwar regelmäßig weniger Verpackungsaufwand, andererseits aber, gerade wenn es gilt, Mischungsverhältnisse einzuhalten, besonderer Dosieraufwand. Für Flüssigkeiten sind hierbei Pipetten und Tropfer bekanntgeworden, die geringe Mengen abgeben können. Auch für pulverförmige Substanzen sind entsprechende Dosiervorrichtungen bekannt geworden, die allerdings häufig einen vergleichsweise großen Aufwand bedingen, zumal die Dosiervorrichtung bei der Verwendung für unterschiedliche Substanzen dann nach jedem Zumischvorgang gereinigt werden müßte, was für die zahnärztliche Praxis im Grunde nicht akzeptabel wäre.

Andererseits ist es gerade bei der Verwendung von Katalysatoren als Reaktionssubstanzen wichtig, daß diese in einer aktiven Form vorliegen, also in einer Form, in welcher noch keine vorzeitigen und unerwünschten Reaktionen ausgelöst worden sind, nachdem die beispielsweise die Qualität und Sicherheit in der Anwendung bei einem Adhäsiv ganz wesentlich davon abhängt, daß die erforderlichen Reaktionssubstanzen in dem definierten Verhältnis und in unverfälschter Qualität zusammengeführt werden.

Daher liegt der Erfindung die Aufgabe zugrunde, eine Mischanordnung gemäß dem Oberbegriff von Anspruch 1 und ein entsprechendes Vefahren zu schaffen, die die Vorteile einer Bereitstellung der zu mischenden Substanzen aus Gebinden und einer Single-Dose-Einheit miteinander verbinden.

Diese Aufgabe wird erfindungsgemäß durch Anspruch 1 gelöst. Vorteilhafte Weiterbildungen ergeben sich aus den Unteransprüchen.

Erfindungsgemäß kann eine der für die Reaktion erforderlichen Substanzen, insbesondere ein Basisstoff, in einem Gebinde,z.B. einer Flasche, aufbewahrt und bereitgehalten werden. Sowohl die Unterlage als auch mindestens eine andere Reaktionssubstanz, insbesondere ein Katalysator, kann nach der Art einer Single-Dose-Einheit bereitgestellt werden, wobei sich der erfindungsgemäße besondere Vorteil ergibt, daß das Reaktionsmittel auf der Unterlage bereits vorgefertigt bereitgestellt ist, so daß insofern weder ein Verschütten beim Aufbringen dieses Reaktionsmittels auf die Unterlage zu befürchten ist noch eine umständliche Handhabung der Single-Dose-Einheit zu erwarten ist. Vielmehr kann kurzerhand eine bereits gefüllte Aufnahmemulde der Blisterbasis mit dem Basisstoff z.B. in Form eines Tropfens versehen werden, und dann unmittelbar und vor Ort mit Hilfe des ohnehin erforderlichen Applikationselements die erforderliche Durchmischung vorgenommen werden.

Damit entfällt die umständliche Dosierung des Reaktionsmittels, während je nach Aggregatzustand der Basissubstanz in besonders günstiger erfindungsgemäßer Ausgestaltung die Befüllung der Aufnahmemulde als Indikator für die Zusatzbefüllung mit dem Basisstoff herangezogen werden kann. Wenn beispielsweise ein fester oder halbfester Katalysator auf der Unterlage aufgebracht ist und die Unterlage muldenförmig ist, kann die Dosierung so abgestimmt sein, daß für das erwünschte Mischungsverhältnis eine Befüllung zur seitlich heraufgezogenen Grenzlinie der aufgebrachten Reaktionsmittelschicht geboten ist. Wenn andererseits das auf der Unterlage aufgebrachte Reaktionsmittel halbfest ist und als Basisstoff eine flüssige Substanz eingesetzt werden soll, ist es auch möglich, das Applikationselement mit einer Dosiermulde nach der Art eines Löffels zu versehen, die eine entsprechende Dosierung ohne Einsatz einer speziell ausgebildeten Dosiervorrichtung erlaubt.

Gemäß einer besonders günstigen Ausgestaltung der erfindungsgemäßen Mischanordnung ist es vorgesehen, den Katalysator oder das sonstige Reaktionsmittel als Single-Dose-Einheit vorgefertigt in einem geschlossenen Behältnis aufzubewahren. Bei dieser Lösung ist sichergestellt, daß die empfindlichere der Substanzen dicht, insbesondere gegebenenfalls unter Luftabschluß aufbewahrt wird, bis sie benutzt wird, so daß auch bei längerer Lagerzeit keine Verschlechterung der Qualität der für die Reaktion erforderlichen Substanzen zu befürchten ist.

Dennoch kann die Basissubstanz aus einem Gebinde, wie beispielsweise einer Flasche hinzugefügt werden. Beispielsweise können ein oder mehrere Tropfen aus einer Flasche mit Adhäsiv in die Aufnahmemulde, die mit dem Katalysator-Film belegt ist, eingetropft werden und der Katalysator gelöst und aufgenommen werden.

In diesem Zusammenhang ist es besonders günstig, daß erfindungsgemäß auch die Form des festen Reaktionsmittels an die Mischungsverhältnisse und die vorhandenen Basissubstanzen anpaßbar ist. Hierzu wird ein entsprechend vorgewähltes Volumen der Aufnahmemulde festgelegt und als Unterlage für die erfindungsgemäße Mischanordnung verwendet.

In diesem Zusammenhang ist es besonders günstig, wenn ein Füllungsgrad von mindestens 20% bezogen auf das Gesamtsystem aus Reaktionssubstanz oder Reaktionssubstanzen und Basisstoff angestrebt wird. Ein etwa 50% nahekommender Füllungsgrad trägt zur Verbesserung der Durchmischung bei der gleichen Anzahl und Intensität von Rührbewegungen bei, wobei es sich versteht, daß es erfindungsgemäß bevorzugt ist, daß eine feste oder halbfeste Substanz mit einer mindestens halbflüssigen, bevorzugt flüssigen Substanz gemischt wird.

Für die Verbesserung des Durchmischungsgrads ist es in der Regel günstig, wenn die Aufnahmemulde am Übergang zwischen Seitenflächen und Grundfläche Radien aufweist. Bevorzugt sind die Radien so-bemessen, daß sie zu dem Spitzenradius des beigefügten Applikationselements passen, um insofern die Handhabung zu vereinfachen.

Diese Lösung ist besonders günstig bei der vorteilhaften Ausgestaltung der Mischanordnung, die in einer Verpackungseinheit sowohl das zugehörige Applikationselement in einem Aufnahmefach als auch die Unterlage, die bereits mit dem Reaktionsmittel versehen ist, in der Aufnahmemulde vorsieht.

Es versteht sich, daß die Form der Aufnahmemulde, also insbesondere das Höhen/Breiten-Verhältnis, in weiten Bereichen an die Erfordernisse anpaßbar ist. So kann die Aufnahmemmulde als flächige Unterlage ausgebildet sein, die flach, leicht konkav oder deutlich konkav ist. Die Aufnahmemulde kann mit einer Siegelfolie überdeckt sein oder es können mehrere Mulden mit einer Folie abgedeckt sein, die sich ggf. pro Mulde abziehen lassen.

In besonders günstiger Ausgestaltung der erfindungsgemässen Mischanordnung ist es vorgesehen, daß die Aufnahmemulde und das Aufnahmefach von einer gemeinsamen Siegelfolie überdeckt und abgedichtet sind, die dann in einem Zuge ablösbar ist. Diese Ausführungsform ist besonders für eine bedienungssichere und einfache Handhabung geeignet. Der Bediener zieht die Siegelfolie ab und entnimmt das Applikationselement dem Aufnahmefach. Der Basisstoff wird dem Reaktionsmittel bis zu der vorgegebenen Markierung zugefügt und mit dem Applikationselement kurz verrührt. Dann wird die fertige Substanz mit dem Appliktionselement auf eine Oberfläche aufgetragen. Oberflächen sind z.B. Zahnkavitäten, Zahnoberflächen, Wurzelkanäle, aber auch zahntechnische Restaurationen wie Kronen. Wenn die Behandlung abgeschlossen ist, läßt sich das Applikationselement erneut in das Aufnahmefach legen und die Aufnahmemulde durch erneutes Andrücken der Siegelfolie verschließen. Auf diese Weise läßt sich die Mischanordnung verschmutzungsfrei entsorgen, auch wenn noch Reste der fertig angerührten Substanz in der Aufnahmemulde verblieben sind. Voraussetzung für diese Lösung ist die Realisierung von wiederverschließbaren Verpackungen, beispielsweise Blisterpackungen. Entsprechende heißsiegelfähige Medien sind an sich bekannt.

Eine besondere Bedeutung hat die Erfindung für lichthärtende bzw. dualhärtende (Licht- und Selbsthärtung) Dentinversiegler, Zemente oder Adhäsive, wie sie z.B. in der Füllungstechnik für Composits oder zur Zementierung von Kronen verwendet werden. Bei diesen Materialien benötigt man drei Katalysatoren z.B. Campherchinon für die Lichthärtung und Peroxid und Amin für die Selbsthärtung. Da man diese drei Katalysatoren nicht in einem Material lagern kann, ist man gezwungen, zwei Flüssigkeiten oder Pasten wenn nicht sogar drei zusammenzumischen, bevor das Material seinem Verwendungszweck zugeführt wird. Mit Hilfe dieser Erfindung ist es möglich, ein oder zwei Katalysatoren als feste oder halbfeste Substanzen in einer Aufnahmemulde als Oberflächenschicht zu lagern und durch Hinzufügung einer Flüssigkeit, die einen weiteren Katalysator aufnimmt, z.B. ein dualhärtendes Adhäsiv herzustellen.

Weitere Vorteile, Einzelheiten und Merkmale ergeben sich aus der folgenden Beschreibung zweier Ausführungsformen anhand der Zeichnungen.

Es zeigen:
- Fig. 1: einen Schnitt durch eine erste Ausführungsform einer erfindungsgemäßen Mischanordnung; und
- Fig. 2: einen Schnitt durch eine zweite Ausführungsform einer erfindungsgemäßen Mischanordnung.

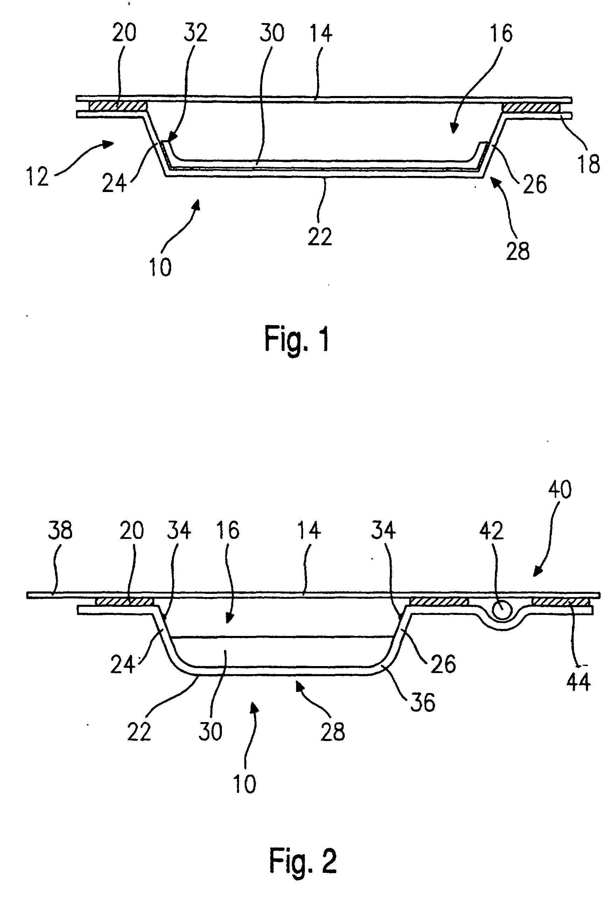

Die in Fig. 1 dargestellte Mischanordnung 10 ist als Blisterpackung ausgebildet. Sie besteht aus einer Blisterbasis 12 und einer Siegelfolie 14. In an sich bekannter Weise ist die Blisterbasis 12 tiefgezogen und weist dementsprechend eine Aufnahmemulde 16 auf. Die Aufnahmemulde 16 ist von Randflanschen 18 der Blisterbasis 12 umgeben. Die Randflansche 18 sind auf ihrer Oberseite mit Klebstoff 20 versehen, wobei sich der Klebstoffauftrag 20 vollständig um die Aufnahmemulde 16 herum erstreckt und der Abdichtung nach außen hin dient. Der Klebstoff 20 verbindet damit den Randflansch 18 mit der Siegelfolie 14.

In einer gegenüber der Darstellung in Fig. 1 modifizierten Ausgestaltung ist die Siegelfolie 14 heißsiegelfähig und durch Wärmebehandlung mit dem Randflansch 18 verbunden. In beiden Fällen ist es günstig, wenn in an sich bekannter Weise an einer Stelle die Siegelfolie 14 zur Bildung einer Aufreisslasche verlängert ist, wie es aus Fig. 2 ersichtlich ist.

Die erfindungsgemäße Aufnahmemulde 16 weist eine Grundfläche 22 und zwei Seitenflächen 24 und 26 auf. Die Seitenflächen 24 und 26 divergieren leicht nach außen, etwa in einem Winkel von 20% bezogen auf die Senkrechte. Die Grundfläche 22 und Teile der Seitenfläche 24 und 26 bilden zusammen eine flächige Unterlage 28. Erfindungsgemäß ist die Grundfläche 22 und auch der untere Teil der Seitenflächen 24 und 26 mit einem Reaktionsmittel 30, z.B. einem Katalysator, beschichtet. In dem in Fig. 1 dargestellten Ausführungsbeispiel ist der Katalysator fest und wird bei der Herstellung kurzerhand dadurch aufgebracht, dass er mit einem Lösungsmittel versehen in die Aufnahmemulde 16 eingebracht wird und dafür gesorgt wird, dass das Lösungsmittel verdampft. Hierdurch bildet sich die aus Fig. 1 ersichtliche Schicht aus, die in den Ecken zwischen Seitenfläche 24, 26 und Grundfläche 22 leichte Ausrundungen zeigt. Gegebenenfalls lassen sich so auch mehrere Schichten mit mehreren Katalysatoren übereinander aufbringen. Es ist auch möglich, eine Schicht mit zwei Katalysatoren als Mischung zu realisieren, so daß beide Katalysatoren gleichzeitig aufgebracht werden und gleichzeitig für die Reaktion zur Verfügung stehen.

Beim Verdunsten des Lösungsmittels wird darauf geachtet, daß die erfindungsgemäße Mischanordnung auf einer waagerechten Fläche steht. Hierdurch ergibt sich eine symmetrische und scharf umgrenzte Begrenzung 32, bis zu welcher der Katalysator 30 an die Seitenfläche 24, 26 heraufreicht. Diese Begrenzung 32 kann zugleich als Füllmarkierung für die bei der Anwendung hinzuzufügende Substanz dienen. Der Katalysator oder die Katalysatoren können auf die Oberfläche auch mit Hilfe eines Gefriertrocknungsverfahrens aufgebracht werden.

Beim Hinzufügen dieses Bestandteils, der bevorzugt als Basisstoff ausgebildet ist, muß dementsprechend lediglich darauf geachtet werden, daß die Begrenzung 32 als Füllmarke dient. Diese Lösung ist dementsprechend besonders geeignet, wenn der Basisstoff flüssig ist.

Eine demgegenüber modifizierte Ausgestaltung ist aus Fig. 2 ersichtlich. Bei dieser Lösung wird ein halbfestes Reaktionsmittel 30 verwendet und der Basisstoff kann entweder viskos oder flüssig sein. Es sind Markierungen 34, 36 vorgesehen, die andeuten sollen, bis zu welcher Höhe der Basisstoff aufgefüllt werden soll, um das richtige Mischungsverhältnis zu gewährleisten.

Das in Fig. 2 dargestellte Ausführungsbeispiel weist im wesentlichen die gleichen Teile auf, wie es anhand von Fig. 1 erläutert wurde, so daß die gleichen oder entsprechenden Bezugszeichen verwendet wurden und eine Erläuterung entbehrlich ist.

Über Fig. 1 hinausgehend weist der Übergang der Unterlage 28 zwischen der Grundfläche 22 und den Seitenflächen 24, 26 Ausrundungen 36 auf, die die Durchmischung beim Rühren erleichtern. Zudem ist die Siegelfolie 14 zur Bildung einer Greiflasche 38 verlängert. Die Besonderheit der Ausführungsform gemäß Fig. 2 ist darin begründet, daß über die Aufnahmemulde 16 hinausgehend ein Aufnahmefach 40 vorgesehen ist, daß ein Applikationselement 42 aufzunehmen vermag. Über einen zusätzlichen Klebstoffauftrag 44 oder über ein anderes Versiegelungsmittel ist auch das Aufnahmefach 40 abgedichtet, so daß das Applikationselement 42 auch während der Lagerung nicht verschmutzungsgefährdet ist.

Bei dieser Ausführungsform läßt sich die Siegelfolie 14 über ein Ziehen an der Greiflasche 38 in einem Zuge öffnen, wobei das Applikationselement 42 ebenfalls freigelegt wird. Der Basisstoff wird in flüssiger oder gegebenenfalls fester Form hinzugefügt, wobei flüssig von sehr dünnflüssig bis dickflüssig/zähviskos reicht, und das Applikationselement 42 dient zugleich als Rührwerkzeug für die Durchmischung.

Ferner läßt sich bei dieser Ausgestaltung durch geeignete Wahl des Klebstoffs 20 eine Wiederversiegelung der Siegelfolie 14 sicherstellen, so daß die Entsorgung der Mischanordnung 10 verschmutzungsfrei möglich ist.

## Patentansprüche

1. Mischanordnung für das Anmischen einer Substanz für den Dentalbereich, deren Herstellung mindestens ein Basisstoff und ein Reaktionsmittel erfordert, **dadurch gekennzeichnet, daß** ein Katalysator als Reaktionsmittel (30) auf einer flächigen Unterlage (28) in fester oder halbfester Schichtform aufgebracht ist und die Einheit aus Katalysator und Unterlage vorgefertigt ist und daß der Basisstoff, insbesondere in flüssiger Form, auf die mit dem Katalysator versehene Unterlage (28) vor dem Gebrauch der Substanz auf- oder einbringbar ist und daß nach dem Vermischen von Katalysator und Basisstoff die Substanz gebrauchsfertig mit einem Applikationselement (42) auftragbar ist.

2. Mischanordnung nach Anspruch 1, **dadurch gekennzeichnet, daß** die Unterlage (28) mulden- oder becherförmig ausgebildet ist und eine im wesentlichen ebene oder konkave Grundfläche (22) aufweist.

3. Mischanordnung nach einem der vorhergehenden Ansprüche, **dadurch gekennzeichnet, daß** mindestens ein Katalysator, insbesondere zwei Katalysatoren, auf der Unterlage (28) aufgebracht sind, die dort eine halbfeste oder feste Schicht bilden.

4. Mischanordnung nach einem der vorhergehenden Ansprüche, **dadurch gekennzeichnet, daß** die Unterlage (28) aus einer Folie im Tiefzieh- oder Spritzgußverfahren hergestellt und der Katalysator durch Beschichten im tiefgezogenen Bereich aufgebracht ist.

5. Mischanordnung nach Anspruch 4, **dadurch gekennzeichnet, daß** der Katalysator sich über die Grundfläche (22) hinaus mindestens teilweise über die Seitenflanken (24,26) einer Aufnahmemulde (16) erstreckt.

6. Mischanordnung nach einem der Ansprüche 4 oder 5, **dadurch gekennzeichnet, daß** der Katalysator als feste oder halbfeste Schicht ausgebildet ist, die eine Aufnahmemulde (16) zu einem geringen Teil, insbesondere zu weniger als 20%, ausfüllt und daß die Beschichtung der Mulde (16) so weit seitlich heraufgezogen ist, daß das Ende der Beschichtung zugleich eine Füllmarke für das richtige Mischungsverhältnis beim Zumischen des Basisstoffs bildet.

7. Mischanordnung nach einer der vorhergehenden Ansprüche, **dadurch gekennzeichnet, daß** der Katalysator in einer tiefgezogenen Folie nach der Art einer Blisterpackung aufgenommen und insbesondere mit einer ablösbaren Siegelfolie (14) verschlossen ist.

8. Mischanordnung nach einem der vorhergehenden Ansprüche, **dadurch gekennzeichnet, daß** der Basisstoff ein Adhäsiv ist und durch Hinzufügung von mindestens einem Katalysator selbsthärtend ist.

9. Mischanordnung nach einem der vorhergehenden Ansprüche, **dadurch gekennzeichnet, daß** eine Mehrfachanordnung von Aufnahmemulden (16) zusammen hergestellt und mit Trennstellen miteinander verbunden sind.

10. Mischanordnung nach einem der vorhergehenden Ansprüche, **dadurch gekennzeichnet, daß** die Unterlage auch ein Aufnahmefach (40) für ein Applikationselement (42) aufweist, wobei die Aufnahmemulde (16) und das Aufnahmefach (40) insbesondere gemeinsam von einer abziehbaren Abdeckfolie (14) verschlossen sind.

11. Mischanordnung nach einem der vorhergehenden Ansprüche, **dadurch gekennzeichnet, daß** der Katalysator einen Farbindikator aufweist, der sich beim Hinzufügen des Basisstoffs in dem richtigen Mischungsverhältnis verfärbt.

12. Verfahren für das Anmischen einer Substanz für den Dentalbereich, insbesondere für das Anmischen eines Adhäsivs, bei welchem die Substanz aus einem Basisstoff und einem Reaktionsmittel hergestellt wird, die unmittelbar vor der Anwendung der Substanz miteinander vermischt werden, **dadurch gekennzeichnet, daß** das Reaktionsmittel mindestens ein Katalysator ist, der zunächst auf einer flächigen Unterlage in fester oder halbfester Schichtform aufgebracht wird, woraufhin die Unterlage verschlossen und abgedichtet wird, und daß für die Applikation der Substanz die Unterlage freigelegt wird und der Basisstoff dem Katalysator zugefügt wird, und daß dann mit einem Applikationselement nach einer geringen Einwirkzeit und gegebenenfalls nach Umrühren die erzeugte Substanz auf ein Zahnersatzteil aufgetragen wird.

13. Verfahren nach Anspruch 12, **dadurch gekennzeichnet, daß** die Substanz auf dem Zahnersatzteil aushärtet.

## Claims

1. A mixing assembly for mixing a substance for the dental sector, the preparation of which requires at least one basic material and a reagent, **characterised in that** a catalyst is applied as reagent (30) to a planar support (28) in a solid or semisolid lamellar form and the unit is prefabricated from catalyst and support, and **in that** the basic material, in particular in liquid form, can be applied to or introduced into the support (28) provided with the catalyst before the substance is used, and **in that** after the mixing of catalyst and basic material the substance can be applied ready for use by means of an application element (42).

2. A mixing assembly according to Claim 1, **characterised in that** the support (28) is trough-shaped or cup-shaped and has a substantially planar or concave base area (22).

3. A mixing assembly according to any one of the preceding Claims, **characterised in that** at least one catalyst, in particular two catalysts, are applied to the support (28), which form a semisolid or solid layer thereon.

4. A mixing assembly according to any one of the preceding Claims, **characterised in that** the support (28) is produced from a sheet in a deep-drawing process or injection-moulding process and the catalyst is applied by coating in the deep-drawn region.

5. A mixing assembly according to Claim 4, **characterised in that** the catalyst extends beyond the base area (22) at least partly over the side flanks (24,26) of a receiving trough (16).

6. A mixing assembly according to either one of Claims 4 or 5, **characterised in that** the catalyst is in the form of a solid or semisolid layer which fills a receiving trough (16) to a small extent, in particular to less than 20 %, and **in that** the coating of the trough (16) is extended upwards laterally to such an extent that the end of the coating serves at the same time as a filling mark for the correct mixing ratio when adding the basic material.

7. A mixing assembly according to any one of the preceding Claims, **characterised in that** the catalyst is accommodated in a deep-drawn sheet in the manner of a blister pack and, in particular, is sealed with a detachable sealing sheet (14).

8. A mixing assembly according to any one of the preceding Claims, **characterised in that** the basic material is an adhesive and is self-hardening upon addition of at least one catalyst.

9. A mixing assembly according to any one of the preceding Claims, **characterised in that** a multiple arrangement of receiving troughs (16) is produced together and joined to one another with separating points.

10. A mixing assembly according to any one of the preceding Claims, **characterised in that** the support also has a receiving compartment (40) for an application element (42), wherein the receiving trough (16) and the receiving compartment (40) are sealed, in particular together, by a peelable cover sheet (14).

11. A mixing assembly according to any one of the preceding claims, **characterised in that** the catalyst has a colour indicator which changes colour upon addition of the basic material in the correct mixing ratio.

12. A method for mixing a substance for the dental sector, in particular for mixing an adhesive, in which the substance is prepared from a basic material and a reagent, which are mixed together immediately before the substance is used, **characterised in that** the reagent is at least one catalyst which initially is applied to a planar support in solid or semisolid lamellar form, whereupon the support is closed and sealed, and **in that** for the application of the substance the support is exposed and the basic material is added to the catalyst, and **in that** then, after a short action time and optionally after stirring, the substance produced is applied to a dental replacement part with an application element.

13. A method according to Claim 12, **characterised in that** the substance cures on the dental replacement part.

## Revendications

1. Dispositif de mélange pour mélanger une substance pour le secteur dentaire dont la fabrication exige au moins une matière de base et un milieu de réaction, **caractérisé en ce qu'**un catalyseur est agencé comme milieu de réaction (30) sur un support plan (28) sous forme de couche solide ou semi-solide et l'unité du catalyseur et du support est fabriquée à l'avance, et **en ce que** la matière de base, notamment sous forme liquide, peut être agencée sur ou introduite dans le support (28) doté du catalyseur avant l'utilisation de la substance, et **en ce qu'**après le mélange du catalyseur et de la matière de base, la substance peut être appliquée en étant prête à l'usage avec un élément d'application (42).

2. Dispositif de mélange selon la revendication 1, **caractérisé en ce que** le support (28) est conçu en forme de creux ou de coupe et présente une surface de base (22) essentiellement plane ou concave.

3. Dispositif de mélange selon l'une des revendications précédentes, **caractérisé en ce qu'**au moins un catalyseur, en particulier deux catalyseurs, sont agencés sur le support (28) et y forment une couche semi-solide ou solide.

4. Dispositif de mélange selon l'une des revendications précédentes, **caractérisé en ce que** le support (28) est fabriqué à partir d'une feuille dans un procédé à emboutissage profond ou à moulage par injection et le catalyseur est agencé par enduction dans une zone emboutie profond.

5. Dispositif de mélange selon la revendication 4, **caractérisé en ce que** le catalyseur s'étend sur la surface de base (22) au moins partiellement sur les flancs latéraux (24, 26) d'une cavité de logement (16).

6. Dispositif de mélange selon l'une des revendications 4 ou 5, **caractérisé en ce que** le catalyseur est conçu comme une couche solide ou semi-solide qui remplit une cavité de logement (16) pour une faible part, notamment moins de 20 %, et **en ce que** l'enduction de la cavité (16) est tirée latéralement jusqu'à ce que l'extrémité de l'enduction forme en même temps une marque de remplissage pour le rapport exact de mélange lors du mélange de la matière de base.

7. Dispositif de mélange selon l'une des revendications précédentes, **caractérisé en ce que** le catalyseur est logé dans une feuille emboutie profond à la manière d'un emballage en blister et enfermé en particulier avec une feuille scellée (14) détachable.

8. Dispositif de mélange selon l'une des revendications précédentes, **caractérisé en ce que** la matière de base est un adhésif et est autodurcissante en ajoutant au moins un catalyseur.

9. Dispositif de mélange selon l'une des revendications précédentes, **caractérisé en ce qu'**un dispositif multiple de cavités de logement (16) est fabriqué et relié ensemble avec des points de séparation.

10. Dispositif de mélange selon l'une des revendications précédentes, **caractérisé en ce que** le support présente aussi un compartiment de logement (40) pour un élément d'application (42), la cavité de logement (16) et le compartiment de logement (40) en particulier étant enfermés ensemble par une feuille de recouvrement (14) étirable.

11. Dispositif de mélange selon l'une des revendications précédentes, **caractérisé en ce que** le catalyseur présente un indicateur coloré qui se colore en ajoutant la matière de base dans la proportion de mélange adéquate.

12. Procédé pour le mélange d'une substance pour le secteur dentaire, notamment pour le mélange d'un adhésif, dans lequel la substance est fabriquée à partir d'une matière de base et d'un milieu de réaction qui sont mélangés ensemble directement avant l'application de la substance, **caractérisé en ce que** le milieu de réaction est au moins un catalyseur qui est d'abord appliqué sur un support plan sous forme de couche dure ou semi-dure, à la suite de quoi le support est fermé et rendu étanche, et **en ce que** pour l'application de la substance, le support est mis à nu et la matière de base est ajoutée au catalyseur, et **en ce qu'**ensuite, après un faible temps d'effet et, le cas échéant, après mélange, la substance produite est appliquée sur une partie de prothèse de dent avec un élément d'application.

13. Procédé selon la revendication 12, **caractérisé en ce que** la substance est durcie sur la partie de prothèse de dent.
